# EUROPEAN PATENT APPLICATION

(11) **EP 0 749 030 A1**
(43) Date of publication of application: **18.12.1996**
(21) Application number: 95938628.5
(22) Date of filing: 01.12.1995
(51) Int. Cl.: G02F 1/1337, G02F 1/1333

(54) **LIQUID CRYSTAL DISPLAY ELEMENT AND METHOD OF MANUFACTURING THE SAME**

(30) Priority: 01.12.1994 JP 298439/94
(71) Applicant: SEIKO EPSON CORPORATION, Tokyo 163 (JP)
(72) Inventor: YAZAKI, Masayuki, Suwa-shi, Nagano-ken 392 (JP); KOBAYASHI, Hidekazu, Suwa-shi, Nagano-ken 392 (JP); YAMADA, Shuhei, Suwa-shi, Nagano-ken 392 (JP); IISAKA, Hidehito, Suwa-shi, Nagano-ken 392 (JP); TSUCHIYA, Yutaka, Suwa-shi, Nagano-ken 392 (JP); CHINO, Eiji, Suwa-shi, Nagano-ken 392 (JP)
(74) Representative: Hoffmann, Eckart, Dipl.-Ing.
(86) International application number: PCT/JP95/02461
(87) International publication number: WO 96/17272

(57) **Abstract**

On the substrate (108) are made reflective type picture element electrodes (107), of Cr, and on substrate 101 are made transparent picture element electrodes (102), of ITO. On both substrates (108, 101) parallel orientation films (106, 103), consisting of polyimide are each made, but rubbing treatment is not administered. Between the substrates (108. 101) polymer dispersed liquid crystal, in which liquid crystal (105) and polymer (104) are in a state of mutual orientation, is placed. Liquid crystal (105) is parallel oriented randomly near the substrate surfaces, and twisted approximately 90° between the substrates (101, 108). Also, the orientation domains from the liquid crystal random orientation are uniformly distributed domains whose diameter is in the range of approximately 1-3 µm. Because they are randomly oriented in this way, directivity of scatter is improved, and operation voltage is decreased.

## Description

### FIELD OF THE INVENTION

The present invention relates to a liquid crystal display device and a method for producing the same, and more particularly, to a liquid crystal display device for use as the display component of an information equipment terminal, television or home appliance product, and a method of producing the same.

### BACKGROUND OF RELATED ART

In recent years, as information equipment has become more compact and lightweight, display devices to be mounted on such equipment have been sought that consume less power. TN type liquid crystal display devices are utilized as reflective displays in small display capacity equipment, while FTN type liquid crystal display devices are utilized in mid-range display capacity equipment. Furthermore, uses wherein an information input apparatus, such as a tablet or the like, is included in the reflective-type display are also expanding, and brightness and good visibility are required in reflective-type liquid crystal display devices.

However, because TN type and FTN type liquid crystal display devices that use conventional polarizing plates have low light utilizing efficiency, the problem arises that these devices become dark when made reflective, and moreover, an extremely dark display results when an information input apparatus, such as a tablet or the like, is included. In addition, because a reflective plate is placed over the polarizing plate on the back surface of the substrate on the back side, in order to make a reflective TN type or FTN type model, double images occur in the display, small characters are unclear, and there are problems with visibility.

On the other hand, bright reflective-type displays that do not use polarizing plates have come to be developed recently. For example, a liquid crystal display device that uses a polymer dispersed liquid crystal in which liquid crystal and polymer are dispersed one in the other, and that performs control so that the display is transparent when an electric field is applied, and the light is scattered when no electric field is applied has been disclosed (JP-A-58-501631), and liquid crystal display devices that perform control so that the light is scattered when an electric field is applied and the display is transparent or light is absorbed when no electric field is applied have also been disclosed (EP-A-0 488 116, JP-A-4-227684, JP-A-5-119302).

In particular, in the polymer dispersed type liquid crystal display device using a polymer dispersed liquid crystal disclosed in EP-A-0 488 116, in which the liquid crystal and polymer are mutually orientated and dispersed one in the other, it is possible to also use the electrodes as light reflective surfaces because no polarizing plate is used, and in this case, visibility, high precision and brightness, which cannot be achieved in TN and FTN type display devices that require polarizing plates, are obtained, and it is possible to obtain a reflective display with superior display quality.

However, with the conventional art that has been disclosed with regard to polymer dispersed type liquid crystal display devices that use polymer dispersed liquid crystal in which the liquid crystal and polymer are mutually orientated and dispersed one in the other, although it is possible to resolve the problems of a liquid crystal display device that uses a polarizing plate, it is necessary for the liquid crystal to be twisted by not less than 360° in order to obtain sufficient scattering characteristics and to secure brightness, and as a result, the problem arises that the driving voltage needs to be high.

For example, large capacity displays are possible by forming active elements such as TFTs (thin film transistors) or MIM (metal-insulator-metal) elements at each pixel and providing electric signal control at each pixel, but because the driving voltage of the polymer dispersed liquid crystal is high, it is difficult to drive the liquid crystal so that the liquid crystal responds adequately from the standpoint of the voltage resistance of the active elements, and the problems also arise that the contrast ratio tends to fall and driving drivers are necessary that can withstand high voltages.

In addition, because of the orientation dispersion structure, the problem arises that there is directivity in the scattering. Directivity is when the light scattering efficiency changes based on the direction of the external incident light, for example the brightness changes as the panel is rotated, and the problem then arises that the visibility is easily influenced by the usage environment. To the extent that the twisting of the liquid crystal is small, the directivity is larger. Accordingly, the twisting of the liquid crystal should be made larger in order to resolve this problem, but when this is done, the driving voltage becomes large, and consequently, making the twisting larger is impossible from the standpoint of the driving voltage.

Furthermore, when large quantities of a chiral agent are added in order to create a large twisting force, the problem arises that a hysteresis is created in the electro-optical properties.

The present invention was made in order to solve these types of problems, and its purpose is to provide a liquid crystal display device, through controlling to a new orientation state a liquid crystal that is mutually orientated with a polymer dispersed therein, which can be operated at low voltage, which is bright, which has a high contrast ratio, which has reduced scatter directivity, and in which visibility has only a low dependence on the usage environment.

### Disclosure of the Invention

In order to solve the problems explained above, the present invention provides a liquid crystal display device wherein a a polymer having a refractive index anisotropy and a liquid crystal, are located in mutual orientation dispersion between two substrates whose surfaces have each undergone orientation treatment and on each of which are formed electrodes, and wherein the liquid crystal is randomly oriented near the substrate surfaces roughly parallel to the substrate surfaces, and is twist oriented between the substrates.

In this way, the liquid crystal is twist oriented between the substrates, but because it is randomly oriented roughly parallel to the substrate surfaces near the substrate surfaces, scatter directivity disappears. Thus, it becomes unnecessary to increase the torsion of the liquid crystal in order to solve the directivity problem, and as a result, it becomes possible to operate the liquid crystal display device at a low voltage. Also, it becomes unnecessary to apply large amounts of chiral agent to increase liquid crystal torsion, and as a result, the appearance of hysteresis in the electro-optical properties is avoided.

Substrate surface orientation treatment is preferably done by forming an orientation film on the substrate surface.

It is preferable that the substrate surfaces not undergo rubbing treatment; in this way the liquid crystal can easily be randomly oriented roughly parallel to the substrate surfaces near the substrate surfaces.

With the liquid crystal display device of the present invention, it is preferable that the liquid crystal shows a uniform distribution of three-dimensional domains between the substrate surfaces, so that within each domain the orientation direction of the liquid crystal is aligned, and so that each domain exists in a random direction within a plane parallel to the substrate surfaces, and so that within each domain the liquid crystal is twist oriented between the substrates.

In this case, it is preferable that the size in terms of the diameter of each domain be between 0.4 and 10 µm. If it is below 0.4 µm, scattering is weak, while when 10 µm is exceeded, each orientation domain becomes identified.

Also, it is preferable that the liquid crystal twist angle be 360° or less. When it is over 360°, the required operation voltage becomes too high, and operation cannot be done with the usual nonlinear elements. It is particularly preferable that the liquid crystal twist angle be between 30 and 180°.

Also, it is preferable that the liquid crystal contains a chiral agent.

Also, it is preferable that the liquid crystal contains a dichroic dye.

Also, in addition, it is preferable that one of the electrodes be formed of a reflective material, so that the present invention can be suitably applied to a liquid crystal display device of the reflective type.

Also, according to the present invention, a method for manufacturing a liquid crystal display device is provided consisting of a process for forming each of first and second electrodes on each of first and second substrates, a process for forming orientation films on the surfaces of each of the first and the second substrates, a process for forming a hollow panel from the first substrate and the second substrate without subjecting the first and second substrate surfaces to a rubbing treatment, a process for placing between the first and second substrates in the hollow panel a liquid crystal mixed material of a liquid crystal composite and a polymer or polymer precursor, and a process to subsequently separate the polymer from the liquid crystal composite and cause the phase separation of the liquid crystal and the polymer.

In this way, by forming orientation films on each of the first and second substrate surfaces, forming a hollow panel from the first substrate and the second substrate without subjecting the first and second substrate surfaces to a rubbing treatment, and by placing between the first and second substrates in the hollow panel a liquid crystal mixed material of the liquid crystal composite and the polymer or polymer precursor, the liquid crystal mixture has a three-dimensional twist structure between the first and second substrates. Then, after that, by separating the polymer from the liquid crystal mixed material and causing the phase separation of the liquid crystal and polymer, the liquid crystal orientation state can be preserved at the orientation state of the liquid crystal mixed material before the phase separation, and while the liquid crystal twist orients between the first and second substrates, it can still be randomly oriented roughly parallel with the substrate surfaces near the substrate surfaces.

In this case, after placing the liquid crystal mixed material between the first and second substrates in the hollow panel, by applying a heat treatment past the temperature at which the liquid crystal mixed material shows isotropy and then quenching it, a uniform distribution of domains of appropriate sizes can be formed.

Also, in terms of convenience of liquid crystal display device manufacture, it is preferable that an ultraviolet cured monomer be used for the polymer precursor, and that the polymer be separated from the mixture of liquid crystal and polymer precursor, and phase separation be accomplished by irradiating the liquid crystal mixed material with ultraviolet rays and polymerizing the monomer.

### Brief Explanation of the Drawings

- Fig. 1: is a cross sectional view of the liquid crystal display device of a first embodiment of the present invention;
- Fig. 2: is a chart showing the electro-optical properties of the liquid crystal display device of the first embodiment of the present invention;
- Fig. 3: is a chart showing the scatter directivity of the liquid crystal display device of the first embodiment of the present invention;
- Fig. 4: is a cross sectional view of the liquid crystal display device of a second embodiment of the present invention;
- Fig. 5: is a cross sectional view of the liquid crystal display device of a third embodiment of the present invention; and
- Fig. 6: is a chart showing the scatter directivity of the liquid crystal display device of comparative example 1.

### Embodiments

### Embodiment 1

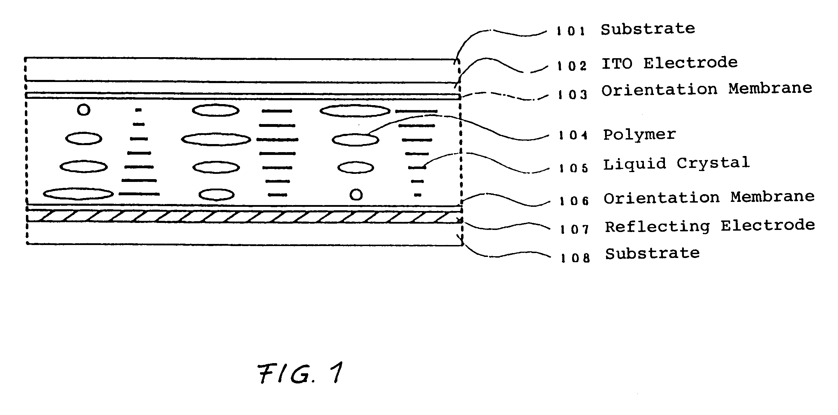

A cross section of the liquid crystal display device of the present embodiment is shown in Figure 1. On lower substrate 108 was formed a chrome layer of 2000 Å (200 nm) thickness by sputtering which was then patterned to obtain reflective picture element electrode 107. On the upper substrate 101 was formed an ITO (Indium Tin Oxide) film of 1500 Å (150 nm) thickness by sputtering which was then patterned to obtain transparent picture element electrode 102. On these two substrates 108 and 101 was applied and baked a polyimide orientation membrane (Optomer AL1254, made by Japan Synthetic Rubber Co.), to form parallel orientation films 106 and 103. In order to obtain a random orientation of the liquid crystal parallel to the substrate surfaces near to the substrate surfaces, no rubbing treatment was performed. Then, by placing the two substrates one upon the other with a gap of 5 µm in between and joining and fixing them along the substrate borders, a hollow panel was obtained.

Next, the liquid crystal and polymer precursor mixed material to be enclosed in this hollow panel will be explained. For the liquid crystal, a mixture of TL-213 (made by Merck) and MJ92786 (made by Merck) at a 7:3 weight ratio was used, and to this were mixed, as a chiral component, R1011 (made by Merck) at 0.15 weight percent and as a dichroic dye, M361, S1-512, and M137 (all made by Mitsui Toatsu Senryo) at, respectively, 1.0 weight percent, 1.5 weight percent, and 0.4 weight percent. The amount of chiral agent to be added is determined by d/p = 1/4 (d is the cell gap and p is the liquid crystal helical pitch), or in other words so as to obtain a 90° twist orientation. Also, as a polymer precursor, biphenyl methacrylate was used at 7 weight percent in relation to the liquid crystal mixture (including the liquid crystal, dichroic dye and chiral agent). After the above was heat-mixed and made to assume a liquid crystal state, it was vacuum enclosed in the previously-explained hollow panel. Then, after the liquid crystal mixed material was heat treated past the temperature at which it shows isotropy, a quenching treatment to 25° C was performed.

The liquid crystal mixed material enclosed in the hollow panel was, near the substrate surfaces, randomly oriented parallel to the substrate surfaces. Inspection with a polarization microscope confirmed that the liquid crystal was twisted by approximately 90° between substrates 101 and 108. The inspection also confirmed that a uniform distribution of domains with a diameter in the range of about 1-3 µm was formed in which the liquid crystalline mixture orientated randomly.

After that, the polymer was separated from within the liquid crystal mixed material by irradiating into the panel ultraviolet rays at an illumination intensity of 5mW/cm² (wavelength 350 nm) for seven minutes and polymerizing the polymer precursor, completing the liquid crystal display device of the present embodiment as shown in Figure 1. Liquid crystal 105 was inspected with a polarization microscope to confirm that it showed the same orientation state as before the ultraviolet irradiation, or in other words that the molecules were randomly oriented parallel to the substrate surfaces near the substrate surfaces, that it was twisted by approximately 90° between substrates 101 and 108, and that the randomly oriented liquid crystal orientation domains were uniformly distributed and had a diameter in the range of about 1-3 µm. Also, it was confirmed with a polarization microscope that polymer 104 was dispersed in liquid crystal 105 and they were in a structure mutually oriented between the substrates, i.e., adjacent polymer molecules or particles and liquid crystal molecules were aligned with respect to each other (their directors were parallel to each other).

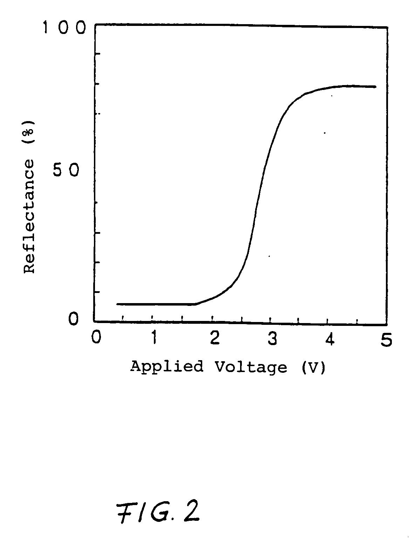

In Figure 2 are shown the liquid crystal display device electro-optical properties obtained in the present embodiment. The electro-optical properties show a threshold characteristic, and through voltage application, a normally black characteristic of increasing reflectance is obtained. In other words, when the voltage is off, a black display is obtained through the absorption by the dichroic dye, and when a sufficient voltage is applied, the liquid crystal is oriented along the electric field direction, so the orientation direction of the polymer and liquid crystal differs and discontinuous points in the refractive index arise in the medium, so it enters a light scattering state. At this time, the molecules of the dichroic dye are also oriented along the electric field direction, so absorption becomes extremely small, and a white display is obtained.

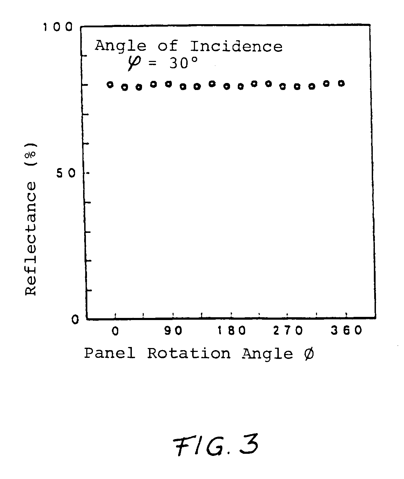

Measured results of the electro-optical properties of the liquid crystal display device of the present embodiment will now be discussed. For measuring the electro-optical properties a xenon lamp ring was used as a light source. A 100 Hz rectangular wave was applied to the liquid crystal display device. The light entered from all sides (360°) from a direction forming an angle of 30° (angle of incidence 30°) with the normal line to the display device surface (panel normal line). Reflected light responding to the incident light in the normal line direction was detected. The area of detection was 2 mm in diameter. Reflectance of 100% is standardized at the luminance of the standard diffusion plate surface. Below, the threshold voltage value V10 is defined as the voltage corresponding to a reflectance of 10% with the (maximum reflectance - minimum reflectance) = 100%, and the saturation voltage value V90 as the voltage corresponding to a reflectance is 90%. Also, for scatter directivity, using parallel beams of light, with incidence angle ϕ, formed between the parallel beams and the panel normal line, and panel rotation angle φ as parameters, the change in reflectance in the panel normal line direction was measured. For the liquid crystal display device of the present embodiment, V10 is 1.9V, V90 is 3.4V, and the reflectance of the sample panel is 78%. Figure 3 shows results of scatter directivity measurement when ϕ = 30° and a voltage of 3.8V is applied.

In the present embodiment, compared to the prior art polymer dispersed liquid crystal display devices, the drive voltage is reduced drastically for a polymer dispersed type liquid crystal display device using a polymer dispersed liquid crystal in which liquid crystal and polymer are mutually orientated. In addition, its reflectance, which becomes the index of brightness, is high, for a good level of brightness. Also, in the liquid crystal display device of the present embodiment, as shown in Figure 3, there is no scatter directivity in relation to panel rotation angle φ. Thus, in an environment with strong light from a certain direction or under an even illumination, brightness changes due to the panel arrangement method are eliminated, and visual angle characteristics, portability, and visibility are improved.

### Embodiment 2

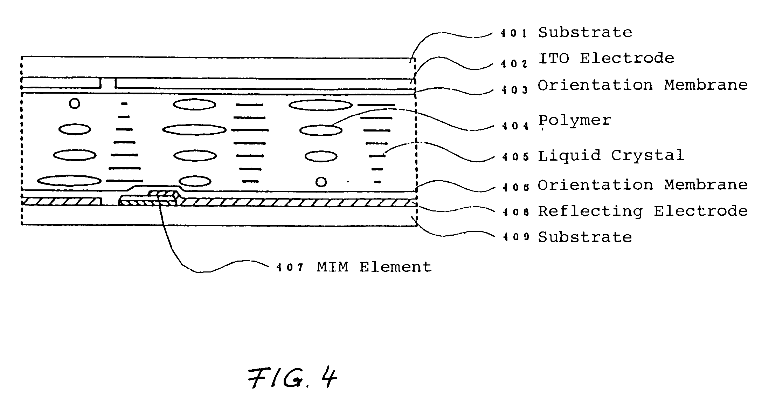

The second embodiment employs a structure in which two-terminal elements (MIM) are formed on each picture element electrode, and in which the liquid crystal is has uniformly distributed domains and is twist oriented between the substrates. Figure 4 shows a cross-section of the liquid crystal display device of the present embodiment. The lower substrate 409 is a MIM substrate manufactured through two photoprocesses. As to the lower substrate, Ta was sputtered and then it was patterned to the desired shape (first photoprocess). Next, the Ta was anodized thereby forming on the Ta surface an insulating Ta₂O₅ layer. Then, Cr was sputtered and subsequently patterned to the desired shape (second photoprocess) so as to complete MIM element 407, consisting of Ta-Ta₂O₅-Cr, and to form reflective picture element electrode 408, made up of Cr. On the other hand, on upper substrate 401, ITO was sputtered and patterned into a stripe shape thereby forming ITO electrode 402. Then, both substrates, after spin coating with Optomer AL1254 made by Japan Synthetic Rubber Co., were baked for one hour at 150° to form parallel orientation films 403 and 406. The two substrates thus obtained were placed together with a gap of 5 µm in between and their borders were joined and fixed, making a hollow panel with a five inch diagonal. In order to obtain an orientation of the liquid crystal randomly parallel to the substrate surfaces near the substrate surfaces, no rubbing treatment was performed.

Then, the liquid crystal mixed material, consisting of the same liquid crystal, dichroic dye, chiral agent and polymer precursor as in the first embodiment, was vacuum enclosed in the hollow panel. The liquid crystal mixed material enclosed in the panel, just as in the first embodiment, was inspected with a polarization microscope to confirm that it was oriented parallel to the substrate surfaces near the substrate surfaces, and twisted by approximately 90° between substrates 401 and 409, and also to confirm that the randomly oriented liquid crystal orientation domains were uniformly distributed and had a diameter in the range of approximately 1-3µm.

After that, the polymer was separated from within the liquid crystal mixed material by irradiating into the panel ultraviolet rays at an illumination intensity of 5mW/Cm² (wavelength 350 nm) for 7 minutes, and the liquid crystal display device of the present embodiment shown in Figure 4 was completed. Liquid crystal 405 was inspected with a polarization microscope to confirm that it showed the same orientation state as before ultraviolet radiation, or in other words that it was randomly oriented parallel near the substrate surfaces, that it was twisted approximately 90° between substrates 401 and 409, and also that the randomly oriented liquid crystal orientation domains were uniformly distributed and had a diameter in the range of about 1-3 µm. Also, it was confirmed with a polarization microscope that polymer 404 and liquid crystal 405 were in a structure mutually oriented between the substrates and dispersed.

When the liquid crystal display device thus obtained was operated at a 1/480 duty, under the measurement conditions of the first embodiment, the reflectance of the panel was 63%, and the contrast was 11. Also, there was no directivity of the scatter when a voltage was applied, thus making it possible to obtain a liquid crystal display device with superior portability, viewing angle dependency and visibility. In addition, when anti-glare treatment and anti-reflection coating are administered to the surface of this liquid crystal display device, background reflection is reduced and visibility is greatly improved. In addition, in the present embodiment, reflective electrodes are placed on the MIM substrate, but it is also possible to form transparent electrodes on the MIM substrate and reflective electrodes on the other substrate.

### Embodiment 3

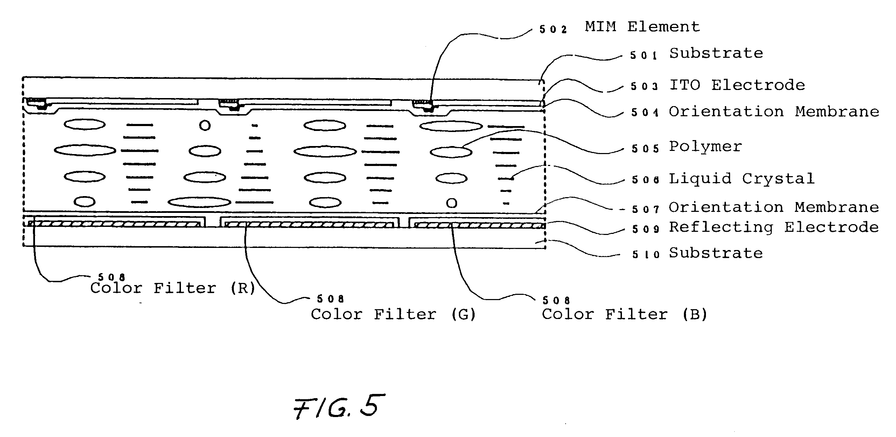

The third embodiment has a structure that uses a substrate that has two-terminal elements (MIM) formed on each picture element electrode, and which has a color filter formed on the reflective electrodes, and in which the liquid crystal forms uniformly distributed domains and is also twist oriented between the substrates. Figure 5 is a cross section of the liquid crystal display device of the present embodiment. Upper substrate 501 is a MIM substrate manufactured through three photoprocesses. After Ta was sputtered, it was patterned to the desired shape (first photoprocess); the Ta was then anodized thereby forming on the Ta surface an insulating Ta₂O₅ layer. Then, after Cr was sputtered, it was patterned into the desired shape (second photoprocess), and a circuit (electrode or wiring), composed of Cr, and MIM elements 502, comprising Ta-Ta₂O₅-Cr, were formed. Then, after ITO was sputtered, it was patterned to the desired shape (third photoprocess) whereby transparent picture element electrodes 503, each connected to a respective MIM element 502, were formed. On the other hand, on bottom substrate 510, after Al-Mg was sputtered, it was patterned into a stripe shape thereby forming reflective electrodes 509. On these reflective electrodes 509, pigment color filters 508 (red, green and blue) were each formed on each picture element. Then, both substrates, after they had been spin coated with Optomer AL 1254 made by Japan Synthetic Rubber Co., were baked for one hour at 150°C to form parallel orientation films 504 and 507. The two substrates thus obtained were placed upon each other with a gap of 5 µm and their borders were joined and fixed, making a hollow panel with a five inch diagonal. In order to orient the liquid crystal randomly in parallel to the substrate surfaces near the substrate surfaces, rubbing treatment is not performed.

Then, the liquid crystal mixed material, consisting of the same liquid crystal, dichroic dye, chiral agent and polymer precursor as in the first embodiment, was vacuum enclosed in the hollow panel. The liquid crystal mixed material enclosed in the panel, just as in the first embodiment, was inspected with a polarization microscope to confirm that it was oriented in parallel near the substrate surfaces, and in a state of being twisted approximately 90° between substrates 501 and 510, and also to confirm that the randomly oriented liquid crystal orientation domains were uniformly distributed and had a diameter in the range of approximately 1-3 µm.

After that, the polymer was separated from the liquid crystal mixed material by irradiating into the panel, ultraviolet rays at an illumination intensity of 5mW/Cm² (wavelength 350 nm) for 7 minutes, and the liquid crystal display device of the present embodiment shown in Figure 5 was completed. Liquid crystal 506 was inspected with a polarization microscope to see that it showed the same orientation state as before ultraviolet radiation, or in other words that it was randomly oriented parallel near the substrate surfaces, that it was twisted approximately 90° between substrates 501 and 510, and also that the randomly oriented liquid crystal domains were uniformly distributed and had a diameter in the range of about 1-3 µm. Also it was confirmed with a polarization microscope that polymer 505 and liquid crystal 506 were in a mutually oriented structure between the substrates and dispersed.

In the liquid crystal display device obtained in this way, when the voltage is off, a black display is obtained through the absorption by the dichroic dye, and a color display is obtained by applying voltage to each color picture element. Also, when operation was performed at a 1/480 duty, the reflectance of the sample panel was 32%, and the contrast was 12. Also, an eight level gray scale display and a 512 color display were possible. In addition, there is no directivity of the scatter when voltage is applied, making it possible to obtain a liquid crystal display device with superior portability, viewing angle dependency and visibility. In addition, when anti-glare treatment and anti-reflection treatment are administered to the surface of this liquid crystal display device, background reflection is reduced and visibility is greatly improved.

Also, in the present embodiment, transparent electrodes are placed on the MIM substrate, but it is also possible to place reflective electrodes on the MIM substrate, and to form color filters on them.

Also, the color filter structure used in the present embodiment need not be limited to red, green and blue; any structure capable of reproducing natural colors may be used in the same way. In addition, it is also possible to place color filters on the upper substrate.

### Comparative Example 1

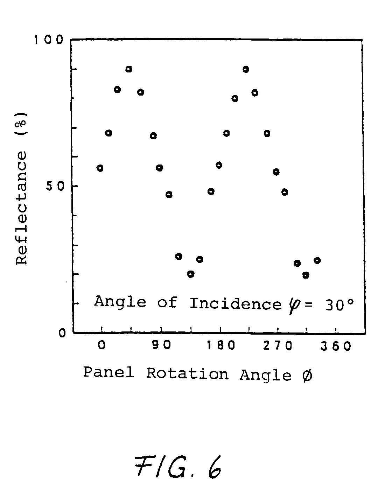

As a comparative example, a liquid crystal display device will now be explained which has a structure with a twist orientation of 90°, but which does not have multiple domains. Specifically, an orientation film was used wherein the polyimide film had undergone one-direction rubbing treatment, and the hollow panel was constructed so that rubbing directions on the upper and lower substrates formed an angle of 90°. The materials used were the same as in the first embodiment. Then, the liquid crystal mixed material shown in the first embodiment was enclosed, and the polymer was separated from within the liquid crystal by irradiating ultraviolet rays at an illumination intensity of 5mW/Cm² (wavelength 350 nm) for seven minutes, and the liquid crystal display device was completed. The result of scatter directivity measurement in the same way as the first embodiment is shown in Figure 6. Reflectance varies widely depending on the direction of incidence of the light, i.e., a strong scatter directivity is displayed.

This concludes the description of the embodiments of the present invention, but the present invention is not limited to the above embodiments.

For example, in the first through third embodiments, a dichroic dye is added to the liquid crystal, but it is not necessary to add the dye. If the dye is not added, the black level increases slightly when voltage is not applied, but the absorption of the dye is eliminated when no voltage is applied, so the maximum reflectance increases and brightness improves. Also, when reflective electrodes having low reflectance are used, or when a light absorption layer is placed on the reflective electrodes, there is no particular necessity to add a dichroic dye.

Also, in the above embodiments 1-3, structures are shown with twist angles of 90°, but they are not limited to this. It is preferable that the twist angle be 360° or less, and it is particularly preferable that it be between 30-180°. When the twist angle is close to 0°, the twist orientation is not stable, and when it exceeds 360°, the operating voltage is high, and operation is impossible with the usual nonlinear elements.

Also, the chiral compound that determines the twist angle can be added in appropriate amounts corresponding to the set d/p (cell thickness/liquid crystal helical pitch). For the chiral agent, it is preferable that the material used in normal TN and STN type material be used in the same way.

It is desired that the domains which comprise a random orientation of liquid crystal between the substrate surfaces have a uniform diameter in the range of 0.4-10 µmin respect of a uniform transparency of the panel when no voltage is applied and a scattering characteristic when voltage is applied. If it is under 0.4 µm, scatter is weak, and at over 10 µm, each orientation domain becomes identified. Also, at such a size as mentioned above, to form uniformly distributed domains, it is preferable that the method be used of heating and making isotropic the liquid crystal mixed material and then quenching it.

In the above embodiments 1-3, for the orientation film used, a polyimide film was used, but in addition, a polyamide film, a SiO rhombic evaporation membrane, or polyvinyl alcohol may be used effectively.

As regards the materials for the substrates, soda glass, quartz, non-alkali glass, silicon mono-crystal, sapphire substrate, thermosetting polymer, thermoplastic polymer, or the like may be suitably used. The polymer material used in the substrates is not particularly limited as long as it does not have a negative effect on the liquid crystal and polymer contained between the substrates, and PET, polyethyl sulfone, epoxy hardening resin, phenoxy resin, polyallyl ether or the like may be suitably used.

The reflective electrodes are Cr in the first and second embodiment and Al-Mg in the third embodiment, but a metal such as Al, Cr, Mg, Ag, Au, Pt or the like, or alloys of these may be effectively used. In particular, Cr or an Al-Mg alloy are preferable from the standpoint of stability and reflectance, and in the case of the Al-Mg alloy, it is desirable that Mg be added in the amount of 0.1 to 10% by weight.

For the liquid crystal, what is normally used in liquid crystal display devices may be effectively used, but in order to improve the degree of scattering, it is desirable that the refractive index anisotropy Δn of the liquid crystal is equal to or greater than 0.15. Also, in order to drive by means of nonlinear elements such TFTs or MIM elements, it is desirable that the specific resistivity values of the liquid crystal alone be equal to or greater than 1.0 x 10⁹ Ω·cm, and more preferably, equal to or greater than 1.0 x 10¹⁰ Ω·cm in order to increase the retention rate and improve the display quality.

As the dichroic dye, it is preferable to use azo, anthraquinone, naphthoquinone, perylene, quinophthalone, azomethyn or the like that are normally used in the GH (guest-host) type display devices. Of these, in terms of light resistance, it is particularly preferable to use anthraquinone alone or a mixture of this with another dye, as necessary. These dichroic dyes may be mixed depending on the color needed.

As the polymer precursors, any material can be used, as long as it exhibits refractive index anisotropy after polymerization and orientation disperses with the liquid crystal, but from the standpoint of simplicity in the liquid crystal display device manufacture, it is desirable to use an ultraviolet cured type monomer. For the ultraviolet cured type monomer, a monofunctional methacrylate, bifunctional methacrylate or multifunctional methacrylate are preferably used. To improve the degree of scattering, it is desirable to include at least one benzene ring in the polymer structure of these monomers. In particular, materials containing biphenyl, terphenyl or quarterphenyl lattice are desirable. These monomers may also contain a chiral component. Also, it is possible to irradiate these monomers with ultraviolet rays and polymerize them either alone or after mixing with other monomers.

Also, in above embodiments 2 and 3, MIM elements were used as the two-terminal nonlinear elements, but besides the MIM elements described, lateral type MIM elements, back-to-back type MIM elements, MSI elements, diode ring elements, varistor elements and the like may be used. Also, three-terminal nonlinear elements may of course be used, and for three-terminal nonlinear elements, polysilicone TFT elements, amorphous silicone TFT elements, and Cd-Se TFT elements may be used.

### Possible Industrial Applications

As explained above, through the present invention it is possible, in an polymer dispersed type liquid crystal display device that is bright and free from double images and does not need a polarization plate, to solve the problems of operation voltage and visibility impairment due to scatter directivity, which existed in the prior art, through a new structure involving multi-domaining the liquid crystal and placing it in a state of twist orientation.

In particular, because the operating voltage of the liquid crystal display device of the present invention is reduced to the TN mode level, it is possible to sufficiently operate the MIM elements and TFT elements and greatly improve brightness and contrast. Through this, it is possible, in the case where it is made as a reflective type color liquid crystal display device, to increase the number of display colors and visibility. Also, high voltage resistant drivers become unnecessary, making possible reductions in electric power consumption and cost.

In addition, in the liquid crystal display device of the present invention, brightness, vision characteristics, and visibility are improved by controlling scatter directivity.

As a result, the present invention may be used as a liquid crystal display device suitable for portable applications where many various environments may be assumed. Also, the present invention is of active matrix operation, and may be used as a reflective type large capacity display with low electric power consumption and superior display quality.

## Claims

1. A liquid crystal display device wherein a polymer with refractive index anisotropy and a liquid crystal of which the former is dispersed in the latter and both are mutually orientated are located between two substrates whose surfaces have each undergone orientation treatment and on each of which are formed electrodes, and wherein said liquid crystal is randomly oriented near said substrate surfaces roughly parallel to said substrate surfaces, and is twist oriented between said substrates.

2. The liquid crystal display device of Claim 1, wherein orientation films are formed on said substrate surfaces.

3. The liquid crystal display device of Claim 2, wherein said substrate surfaces have not undergone rubbing treatment.

4. The liquid crystal display device of Claim 1, wherein said liquid crystal forms uniformly distributed domains within a plane parallel to said substrate surfaces, wherein within each domain the orientation direction of said liquid crystal is aligned, wherein each said domain exists in a random direction within a plane parallel to said substrate surfaces, and wherein within each said domain said liquid crystal is twist oriented between said substrates.

5. The liquid crystal display device of Claim 4, wherein the size of each said domain is between 0.4 and 10 µm.

6. The liquid crystal display device of Claim 1, wherein the twist angle of said liquid crystal is 360° or less.

7. The liquid crystal display device of Claim 6, wherein the twist angle of said liquid crystal is between 30° and 180°.

8. The liquid crystal display device of Claim 1, wherein said liquid crystal contains a chiral agent.

9. The liquid crystal display device of Claim 1, wherein said liquid crystal contains dichroic dye.

10. The liquid crystal display device of Claim 1, wherein one of said electrodes is formed of a reflective material.

11. A method for manufacturing a liquid crystal display device comprising:
a process for forming first and second electrodes on first and second substrates, respectively,
a process for forming orientation films on the surface of each of said first and said second substrates,
a process for forming an hollow panel from said first substrate and said second substrate without subjecting said first and second substrate surfaces to a rubbing treatment,
a process for placing between said first and second substrates in said hollow panel a liquid crystal mixed material of a liquid crystal composite and a polymer or polymer precursor, and
a process for subsequently separating the polymer from the liquid crystal mixed material and cause the phase separation of said liquid crystal and polymer.

12. The method for manufacturing a liquid crystal display device of Claim 11 further comprising a process for heat treating said liquid crystal mixed material past the temperature at which it displays isotropy, after arranging the liquid crystal mixed material of the polymer or polymer precursor and the liquid crystal composite between said first and second substrates of said hollow panel, and after that separating the polymer from said liquid crystal mixed material and causing phase separation of the polymer and liquid crystal.

13. The method for manufacturing a liquid crystal display device of Claim 12, further comprising a process for quenching said liquid crystal mixed material after heat treating it past the temperature at which it shows isotropy.

14. The method for manufacturing a liquid crystal display device of Claim 13, comprising a process for using an ultraviolet cured monomer for said polymer precursor, and separating the polymer from said liquid crystal mixed material and causing phase separation of said liquid crystal and polymer by irradiating said liquid crystal mixed material with ultraviolet rays and polymerizing said monomer.
